(19) Europäisches Patentamt / European Patent Office / Office européen des brevets

(11) **EP 3 769 451 B1**

(12) **FASCICULE DE BREVET EUROPEEN**

(45) Date de publication et mention de la délivrance du brevet:
**04.10.2023 Bulletin 2023/40**

(21) Numéro de dépôt: **19718794.1**

(22) Date de dépôt: **25.03.2019**

(51) Classification Internationale des Brevets (IPC):
**H04L 1/00** *(2006.01)*      **H04L 1/16** *(2023.01)*

(52) Classification Coopérative des Brevets (CPC):
**H04L 1/0076; H04L 1/1628;** H04L 2001/0097

(86) Numéro de dépôt international:
**PCT/FR2019/050670**

(87) Numéro de publication internationale:
**WO 2019/180395 (26.09.2019 Gazette 2019/39)**

(54) **PROCÉDÉ ET SYSTÈME OMAMRC DE TRANSMISSION AVEC SIGNALISATION RÉDUITE**

VERFAHREN UND SYSTEM FÜR OMAMRC ÜBERTRAGUNG MIT REDUZIERTE SIGNALISIERUNG

METHOD AND SYSTEM FOR OMAMRC TRANSMISSION WITH REDUCED SIGNALLING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.03.2018 FR 1852543**

(43) Date de publication de la demande:
**27.01.2021 Bulletin 2021/04**

(73) Titulaire: **Orange**
**92130 Issy-les-Moulineaux (FR)**

(72) Inventeurs:
- **CEROVIC, Stefan**
  **92326 CHÂTILLON CEDEX (FR)**
- **VISOZ, Raphaël**
  **92326 CHÂTILLON CEDEX (FR)**

(56) Documents cités:
**EP-A1- 2 672 751     WO-A1-2017/098188**

EP 3 769 451 B1

## Description

La présente invention se rapporte au domaine des communications numériques. Au sein de ce domaine, l'invention se rapporte plus particulièrement à la transmission de données codées entre au moins deux sources et une destination avec relayage par au moins un noeud pouvant être soit un relais, soit une source.

Il est entendu qu'un relais n'a pas de message propre à transmettre. Un relais est un noeud dédié au relayage des messages des sources tandis qu'une source à son propre message à transmettre et peut en outre dans certain cas relayer les messages des autres sources. Une transmission depuis un relais est appelé transmission coopérative. Une transmission depuis une source qui aide au moins une autre source est aussi appelée transmission coopérative. Une source est un noeud de relayage et assure ainsi une fonction de relayage si elle écoute les transmissions des autres noeuds et, sur cette base, essaie de décoder les messages des autres sources.

Il existe de nombreuses techniques de relayage connues sous leur appellation anglo-saxonne : « amplify and forward », « décodé and forward », « compress-and-forward », « non-orthogonal amplify and forward », « dynamic decode and forward », etc.

## Art antérieur

La référence [1] décrit une technique de transmission avec relayage mise en oeuvre dans un système à $M$ sources,

$$\mathcal{S} = \{S_1, ..., S_M\},$$

$L$ relais, $\mathcal{R} = \{R_1, ..., R_L\}$ et une destination $D$ illustrée par la figure 1. Les noeuds (sources et relais) accèdent au canal de transmission selon un schéma d'accès multiple orthogonal en temps (utilisation d'une même ressource radio). Les transmissions des messages des sources sont divisées en trames pendant lesquelles l'état (CSI, Channel State Information selon la terminologie anglosaxonne) des liens est supposé constant (hypothèse d'évanouissements lents). La transmission d'une trame se déroule en deux phases illustrée par la figure 2. Les échanges de messages et de signaux de signalisation sont illustrés par la figure 3.

Pendant la première phase, les sources transmettent chacune leur tour leur message respectivement pendant des intervalles de temps (time slots) dédiés chacun à une source. Chaque message d'une source représente $K$ bits d'information qui incluent des bits de parité, dits CRC, noté $u_{Si}$, $u_{S_i} \in \mathbb{F}_2^K$, i e {1, ... , M}. Les symboles modulés transmis $x_{Si}$ ont des longueurs $N_1$ et les sources sont supposées statistiquement indépendantes ($F_2$ étant le corps de Galois à deux éléments). Chaque intervalle de temps a une durée de $N_1$ utilisations du canal (channel uses). Pour chaque message correspondant à une source, un message est détecté comme correctement décodé par test des bits de parité ou CRC. Un message est assimilé à la source correspondante par abus de notation. Cette phase dure $M$ intervalles de temps.

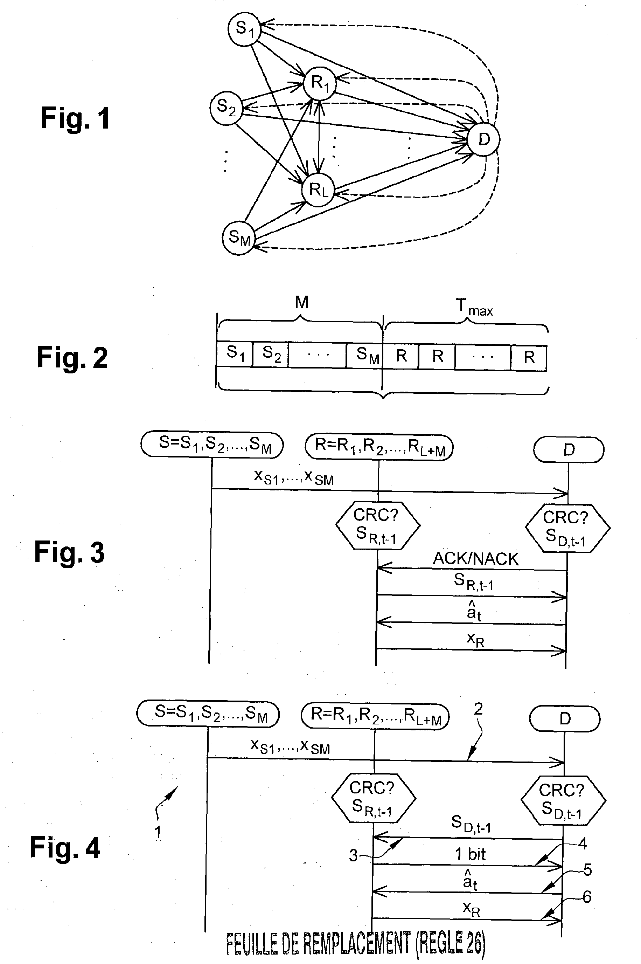

Pendant la deuxième phase, les sources et les relais accèdent au canal de transmission vers la destination selon un schéma d'accès multiple orthogonal en temps qui permet aux relais d'écouter sans interférence les transmissions des autres relais et des sources. Cette phase comprend au maximum $T_{max}$ intervalles de temps (rounds), $T_{max} \geq 1$. Chaque intervalle (round) $t \in \{1, ..., T_{max}\}$ a une durée de $N_2$ utilisations du canal. Sur la figure 2, la notation R indique qu'il s'agit d'une retransmission intervenant pendant la deuxième phase.

La destination $D$ décide du nombre d'intervalles de temps pendant la deuxième phase et de la source ou du relais qui transmet à chaque intervalle pendant cette phase dans le but de décoder correctement un maximum de messages des sources en mettant en oeuvre un mécanisme de répétition hybride et automatique HARQ.

A cette fin, au début de chaque intervalle (round) $t$, la destination diffuse via un canal de contrôle de diffusion (broadcast) un accord commun (common ACK) à destination de toutes les sources et de tous les relais si elle a correctement décodées les messages de toutes les sources à l'issue de l'intervalle (round) $t$ - 1. Dans tous les autres cas, la destination diffuse un désaccord commun (common NACK).

Si la destination a émis un désaccord commun alors au début de chaque intervalle (round) $t$, un signal de contrôle est émis par chacun des relais selon un canal de contrôle point à point (unicast). Ce signal de contrôle identifie le jeu $S_{r,t-1} \subseteq \{S_1, ..., S_M\}$, $1 \leq t \leq T_{max}$, des messages (ou sources) correctement décodés par ce relais à la fin du précédent intervalle.

En tenant compte des jeux reçus, de son propre jeu de messages correctement décodés, des CSI (Channel State Information) des liens sources vers la destination et relais vers la destination, les noeuds précédemment sélectionnés et leurs jeux, la destination sélectionne le noeud $\hat{a}_t$ autorisé à transmettre à l'intervalle $t$ en diffusant un signal de contrôle contenant l'information du relais sélectionné via un canal de contrôle de diffusion (broadcast).

Bien que la stratégie de coopération selon [1] est telle que les sources et les relais coopèrent pour maximiser la somme des débits transmis entre les sources et la destination, elle nécessite une certaine charge de signaux de signalisation.

WO 2017/098188 A1 décrit un relayage dans un système OMAMRC (Orthogonal Multiple-Access Multiple-Relay Channel) dans lequel un relais émet un signal représentatif de son jeu de messages décodés sans erreur sous condition d'une autorisation par la destination.

## Caractéristiques principales de l'invention

La présente invention a pour objet un procédé de transmission de messages successifs formant une trame destiné à être mis en oeuvre par un système de télécommunication à $M$ sources, éventuellement $L$ relais et une destination, $M \geq 2$, $L \geq 0$ selon un schéma d'accès multiple orthogonal du canal de transmission entre les noeuds pris parmi les $M$ sources et les $L$ relais avec un nombre maximum de $M + T_{max}$ intervalles de temps par trame transmise dont $M$ intervalles alloués pendant une première phase à la transmission successive des $M$ sources et au maximum $T_{max}$ intervalles pour une ou plusieurs transmissions coopératives alloués pendant une deuxième phase à un ou plusieurs noeuds sélectionnés selon une stratégie de sélection, $1 \leq T_{max}$, les noeuds fonctionnant en mode half-duplex. Le procédé comprend :

- décodage par au moins un noeud de messages transmis par les sources avec détection d'erreurs sur les messages pour déterminer un jeu de messages de sources correctement décodés par ce noeud,
- décodage par la destination de messages provenant d'un noeud avec détection d'erreurs sur les messages pour déterminer un jeu de messages de sources correctement décodés par la destination et, pour un intervalle $t$ de temps de la deuxième phase, le procédé comprend en outre :
- transmission de la destination aux noeuds d'un message de contrôle indiquant son jeu de messages de sources correctement décodés,
- détermination par au moins un noeud si au moins un message de son jeu de messages de sources correctement décodés n'appartient pas au jeu de messages de sources correctement décodés par la destination,
- transmission d'une information binaire par au moins un noeud vers la destination indiquant le résultat de la détermination,
- sélection par la destination d'un des noeuds autorisé à transmettre pendant l'intervalle $t$ de transmission.

Le système de transmission OMAMRC considéré comporte au moins deux sources et éventuellement un ou plusieurs relais, chacune de ces sources pouvant fonctionner à des instants différents soit comme une source, soit comme un relais. Une source peut être n'importe quel équipement qui a un message à transmettre et qui possède des moyens de codage et de décodage. La terminologie noeud de relayage couvre aussi bien un relais qu'une source agissant comme un relais. Ainsi, le système considéré est tel que les sources peuvent elle-même être des relais. Un relais se distingue d'une source s'il n'a pas de message à transmettre qui lui soit propre c'est-à-dire qu'il ne fait que retransmettre des messages provenant d'autres noeuds. Un noeud de relayage qui est une source a toujours son propre message dans son jeu de sources décodées sans erreur. Une source qui n'est pas un noeud de relayage a toujours son jeu de message considéré comme décodé sans erreur identique à son propre message. La destination connait à l'avance la nature des noeuds et connaît donc à l'avance quel message une source qui est un noeud mais n'est pas un noeud de relayage peut transmettre.

La destination peut être une station de base ou tout autre équipement adressé par plusieurs sources.

Les liens entre les différents noeuds (sources, relais et destination) du système sont sujets à des évanouissements lents (slow fading selon la terminologie anglosaxonne) et à du bruit blanc Gaussien. Un canal de contrôle limité est autorisé depuis la destination vers les sources et vers les relais.

Un canal de contrôle de diffusion (broadcast en anglais) limité est présent depuis la destination vers les sources et les relais pour informer les sources et les relais du décodage sans erreur à la destination de toutes les sources.

La retransmission d'un noeud, source ou relais, est demandée explicitement par un signal associé à un autre canal de contrôle de diffusion depuis la destination vers les sources et les relais. Celle-ci se traduit en l'émission d'une redondance par le noeud sélectionné basée sur un codage incrémental des sources que le dit noeud a pu décoder sans erreur (son propre message pour une source qui n'est pas un noeud de relayage). Il existe en outre des canaux de contrôle point à point (« unicast » en anglais) pour que chaque noeud de relayage informe la destination des messages reçus et correctement décodés.

Lors de la première phase, les $M$ sources transmettent successivement leur message pendant les $M$ intervalles de temps. Lors de la 2nde phase, les messages des sources sont transmis de façon coopérative par les noeuds (sources et éventuellement relais) pendant au maximum $T_{max}$ intervalles de temps.

Pendant la première phase, les sources indépendantes entre elles diffusent leurs séquences d'informations codées sous forme de messages à l'attention d'un seul destinataire. La destination, les relais et les sources autres que celui qui émet, de type « *Half Duplex* » (HD, (c'est-à-dire qu'une source ou un relais ne peut recevoir et transmettre simultanément)) reçoivent les messages successifs des sources, les décodent et déterminent leur jeu de messages de sources décodés sans erreur.

La destination diffuse aux noeuds son jeu de messages de sources décodés sans erreur.

Chaque noeud (relais et sources) compare son propre jeu au jeu de la destination. Si son propre jeu n'est pas inclus dans le jeu de la destination c'est-à-dire qu'il a au moins décodé correctement un message que la destination n'a pas décodé correctement alors il transmet un indicateur à la destination.

A réception des indicateurs provenant des noeuds, la destination identifie immédiatement ceux des noeuds qui peuvent l'aider dans son décodage.

La destination sélectionne alors un noeud parmi les noeuds qui peuvent l'aider.

Le noeud sélectionné transmet alors pendant l'intervalle de temps un message représentatif du au moins un message qu'il a correctement décodé et qui n'est pas compris dans le jeu de la destination.

Ainsi, selon les échanges via typiquement un canal de contrôle, la destination porte à la connaissance des noeuds son jeu de messages correctement décodés. Un noeud peut ainsi déterminer s'il peut aider la destination en comparant ce jeu de la destination avec son propre jeu. Lorsqu'il a correctement décodé un message que la destination n'a pas encore décodé correctement, il peut l'aider et s'il s'agit d'un noeud de relayage il lui envoie alors un indicateur l'en informant. Cet indicateur peut se limiter à un bit.

Malgré les échanges d'information de contrôle très réduit, la destination a la connaissance des noeuds qu'elle peut solliciter à l'intervalle de transmission (intervalle de temps) courant pour l'aider dans son décodage des messages non encore correctement décodés. A noter qu'une source qui n'est pas un noeud de relayage (i.e. qui n'assure pas de fonction de relayage d'un message provenant d'une autre source) a toujours son jeu de message considéré comme décodé sans erreur puisque identique à son propre message. La destination connait à l'avance le jeu d'une source qui n'est pas un noeud de relayage de par sa nature et n'a donc pas besoin de recevoir d'indicateur de ce type de noeud pour éventuellement le solliciter pour l'aider dans son décodage. La destination sélectionne un des noeuds qu'il soit un noeud de relayage ou pas pour l'autoriser à transmettre en tenant compte des informations binaires reçues.

Ainsi, la stratégie de coopération selon l'invention est telle que les sources et les relais éventuels coopèrent avec la destination pour maximiser le décodage de la destination avec une charge de signalisation moins coûteuse que selon les techniques connues.

En effet, la transmission de signaux de contrôle via des canaux unicast est limitée à la transmission des noeuds vers la destination d'un indicateur. Cet indicateur peut se limiter à un bit transmis.

Un tel procédé est particulièrement adapté à un système déployé en milieu urbain dans lequel le canal de transmission a généralement un profil à évanouissements dit de Rayleigh. En effet, de tels évanouissements perturbent le signal transmis et se traduisent par une probabilité non nulle de détection erronée (probabilité dite de coupure ou d'« outage » selon 1a terminologie anglosaxonne).

Selon un mode de réalisation, l'information binaire est portée par la transmission d'un indicateur binaire prenant la valeur un quand la détermination par le noeud conduit à l'identification d'au moins un message et prenant la valeur zéro dans le cas contraire.

Selon un mode de réalisation pas revendiqué, l'information binaire est portée par la transmission d'un signal intervenant uniquement dans le cas où la détermination par le noeud conduit à l'identification d'au moins un message.

Selon un mode de réalisation, si le jeu de messages de sources correctement décodés par la destination indiqué dans le message de contrôle comprend toutes les sources ou si $t = T_{max}$ alors la deuxième phase est interrompue, les noeuds et la destination effacent toute mémorisation des messages de la trame et une nouvelle trame est transmise. Ainsi, lorsque $t = T_{max}$ le procédé est interrompu après le décodage par la destination de l'information reçue suite à la transmission du noeud sélectionné puisqu'il n'y a plus d'intervalle pouvant être alloué pour la transmission de la trame courante.

Selon un mode de réalisation, la stratégie de sélection des noeuds correspond à chaque intervalle à la sélection du noeud parmi les noeuds dits noeuds éligibles qui ont décodés correctement au moins une source que la destination n'a pas décodé correctement à l'issue de l'intervalle de temps précédent et qui bénéficie de la meilleure qualité instantanée parmi des qualités instantanées des liens entre ces noeuds éligibles et la destination.

Selon un mode de réalisation, un noeud qui assure une fonction de relayage met en oeuvre un relayage dit JNCC.

Selon un mode de réalisation, un noeud qui assure une fonction de relayage met en oeuvre un relayage dit DCC.

Selon un mode de réalisation, un noeud qui assure une fonction de relayage met en oeuvre un relayage dit à répétition avec combinaison dite MRC à la destination.

L'invention a en outre pour objet un système comprenant $M$ sources half-duplex, éventuellement $L$ relais half-duplex et une destination, $M > 1$, $L \geq 0$, pour une mise en oeuvre d'un procédé de transmission selon un objet précédent.

L'invention a en outre pour objet chacune des applications logicielles spécifiques sur un support d'information, lesdites applications comportant des instructions de programme adaptées à la mise en oeuvre du procédé de transmission lorsque ces applications sont exécutées par des processeurs respectivement d'une source, d'une destination et éventuellement d'un relais.

L'invention a en outre pour objet des mémoires configurées comportant des codes d'instructions correspondant respectivement à chacune des applications spécifiques.

La mémoire peut être incorporée dans n'importe quelle entité ou dispositif capable de stocker le programme. La mémoire peut-être de type ROM, par exemple un CD ROM ou une ROM de circuit microélectronique, ou encore de type magnétique, par exemple une clé USB ou un disque dur.

D'autre part, chaque application spécifique selon l'invention peut être téléchargée depuis un serveur accessible sur un réseau de type Internet.

Les caractéristiques optionnelles présentées ci-dessus dans le cadre du procédé de transmission peuvent éventuellement s'appliquer à(aux) l'application(s) et à(aux) la mémoire(s) ci-dessus évoquées.

L'invention s'applique notamment, mais non exclusivement, à la transmission de données via des réseaux mobiles, par exemple pour des applications temps réel, ou via par exemple des réseaux de capteurs. Le réseau est un réseau multi-utilisateurs, constitué de plusieurs sources, éventuellement plusieurs relais et un destinataire utilisant un schéma d'accès multiple orthogonal du canal de transmission entre les sources, les relais et la destination, noté OMAMRC (« Orthogonal Multiple-Access Multiple-Relay Channel » selon la terminologie anglosaxonne). Le système met en oeuvre une stratégie de coopération dite IR-HARQ (Incremental Redundancy Hybrid-ARQ selon la terminologie anglosaxonne) basée sur un relayage sélectif dit SDF (Sélective Décode and Forward selon la terminologie anglosaxonne).

Dans ce type de coopération, les sources indépendantes entre elles diffusent leurs séquences d'informations codées sous forme de messages à l'attention d'un seul destinataire et en présence éventuellement de relais. Les noeuds de relayage de type « *Half Duplex* » (HD, (c'est-à-dire qu'un noeud de relayage ne peut recevoir et transmettre simultanément)) reçoivent les messages des sources, les décodent et génèrent un message uniquement à partir des messages des sources décodés sans erreur. Les noeuds (incluant sources et relais) accèdent ensuite au canal de manière orthogonale en temps entre eux pour transmettre leur message vers la destination. La sélectivité des noeuds de relayage fait qu'un noeud de relayage ne transmet un signal que s'il décode au moins une source sans erreur.

Les liens entre les différents noeuds du système sont sujets à des évanouissements lents (slow fading selon la terminologie anglosaxonne) et à du bruit blanc Gaussien. Un canal de contrôle limité est autorisé depuis la destination vers les sources et vers les relais. L'état CSI de chacun des liens n'est pas disponible à la destination pour limiter le coût de surcharge des voies de retour depuis les sources et les relais vers la destination portant une information sur la distribution des canaux (CDI : Channel Distribution Information) de tous les liens, par exemple, les moyennes des SNR de tous les liens. Cette information est nécessaire à la destination pour déterminer les débits alloués aux sources (adaptation de lien dite lente).

**Liste des figures**

D'autres caractéristiques et avantages de l'invention apparaîtront plus clairement à la lecture de la description suivante de modes de réalisation, donnés à titre de simples exemples illustratifs et non limitatifs, et des dessins annexés, parmi lesquels :

- la figure 1 est un schéma d'un système dit OMAMRC (Orthogonal Multiple Access Multiple Relays Channel),
- la figure 2 est un schéma d'un cycle de transmission d'une trame,
- la figure 3 est un schéma de la signalisation mise en oeuvre par le procédé selon l'art antérieur,
- la figure 4 est un schéma de la signalisation mise en oeuvre par le procédé selon l'invention.

**Description de modes de réalisation particuliers**

La description d'un mode de réalisation de l'invention qui suit est illustrée avec une mise en oeuvre par un système OMARC à $M = 3$ sources, $L = 3$ relais et une destination. Nous supposons par ailleurs que chaque source est un noeud de relayage, c'est à dire que chaque source essaye de décoder le message des autres sources sur la base des transmissions des relais et des autres sources.

Le procédé 1 comprend une première phase et une deuxième phase illustrées par la figure 2. La première phase comprend les $M = 3$ intervalles de temps pendant lesquels les $M$ sources $S = S_1, S_2, ..., S_M$ transmettent respectivement leurs messages $x_{S1}, ...., x_{SM}$. La deuxième phase comprend $T_{max} = 4$ intervalles de temps (retransmission rounds). La destination $D$ et les noeuds de relayage $R = R_1, R_2, ..., R_{L+M}$ (relais et sources) reçoivent les messages transmis, les décodent et déterminent quels messages sont correctement décodés en testant le CRC. Chacun de ces équipements détermine ainsi son jeu $S_{D,t-1}$, $S_{R,t-1}$ de messages correctement décodés.

Au début de chaque intervalle $t$ de temps dit courant de la deuxième phase, l'échange d'information de contrôle pour la mise en oeuvre du mécanisme HARQ illustré par la figure 4 est le suivant.

La destination diffuse 3 via un canal de contrôle de diffusion (broadcast) $M$ bits indiquant son jeu $S_{D,t-1}$ de messages correctement décodés à l'issue de l'intervalle de temps précédent, $t - 1$.

Si ce jeu $S_{D,t-1}$ comprend les messages de toutes les sources alors la deuxième phase est interrompue, les noeuds et la destination vident leur mémoire tampon (memory buffer) i.e. effacent toute mémorisation des messages de la trame courante et de leur décodage et une nouvelle trame est transmise.

Sinon chaque noeud de relayage qui écoute (relais et source coopérative) et qui a décodé correctement au moins un message $S_{R,t-1} \neq 0$ qui n'appartient pas au jeu $S_{D,t-1}$ de la destination, $S_{R,t-1} \not\subset S_{D,t-1}$, envoie 4 une information binaire, par exemple un signal non nul représentant la valeur un d'un indicateur binaire (la non réception d'un signal représente donc la valeur zéro de cette indicateur binaire). L'envoi de la valeur un de cet indicateur est effectué via un canal de contrôle point à point (unicast) vers la destination. Les noeuds de relayage qui n'ont pas décodé au moins un message correctement qui n'appartient pas au jeu de la destination restent silencieux, ils n'émettent rien. Il est à noter qu'une source qui assure une fonction de relayage donc dite noeud de relayage dans cette description particulière n'a pas besoin de transmettre un signal non nul si son jeu $S_{R,t-1}$ est réduit à son propre message. En effet, la destination de par la nature de ce noeud de relayage sait à l'avance que ce noeud peut l'aider pour le message propre de la source.

La destination peut ainsi déterminer aisément sur la base des indicateurs reçus quels sont les noeuds de relayage qui peuvent l'aider. La destination sélectionne un des noeuds de relayage et diffuse 5 sa décision vers les noeuds de relayage via un canal de contrôle de diffusion (broadcast).

Le noeud de relayage sélectionné transmet 6 alors une information représentative de son jeu de messages correctement décodés.

Le noeud de relayage peut encoder conjointement les messages correctement décodés et envoyer des bits de redondance incrémentale représentatifs de tous les messages correctement décodés. Nous dénommerons cette stratégie comme codage réseau et canal conjoint (JNCC Joint Network Channel Coding). D'autres techniques peuvent également être utilisées, comme un codage de canal distribué (DCC Distributed Channel Coding), où par exemple le noeud de relayage peut choisir aléatoirement une unique source, que la destination n'a pas encore décodée, pour laquelle il envoie des bits de redondance incrémentale s'il est sélectionné. Selon un mode de réalisation simple, le noeud de relayage peut répéter un des messages parmi les messages correctement décodés (émettre exactement le même signal que celui émis initialement par la source associée). Dans ce dernier cas la destination utilise une technique de combinaison dite à rapport maximal (MRC Maximal-Ratio Combining) des signaux reçus correspondant à la même source.

Selon un mode de réalisation, une source qui n'est pas un noeud de relayage applique, après avoir été sélectionnée par la destination, une parmi les mêmes stratégies (que celles appliquées par les noeuds de relayage et décrites ci-dessus) mais réduites au cas où le jeu de messages correctement décodés consiste en un unique message qui est son propre message.

Le procédé proposé réduit la charge de signalisation par rapport au mécanisme connu de [1]. Pour établir la comparaison, il est supposé que la destination décode avec succès tous les messages des sources à l'issue des $T_{max}$ intervalles de temps c'est-à-dire qu'elle a eu besoin de $T_{max}$ retransmissions pour arriver à ce succès.

Pour la mise en oeuvre du mécanisme HARQ selon l'invention, la quantité de signalisation agrégée transmise sur les canaux de contrôle unicast des sources et des relais vers la destination à l'issue des $T_{max} = 4$ intervalles de temps est inférieure ou égale à $T_{max} \times (M + L) = 24$ *bits.* L'égalité (quantité $= T_{max} \times (M + L)$) intervient pour le cas le pire selon lequel aucun des noeuds restent silencieux au cours des $T_{max} = 4$ intervalles de temps.

En effet, au début d'un intervalle $t$ de temps courant de la deuxième phase, $t = 1, ..., T_{max}$, chaque noeud $R = R_1, R_2, ... , R_{L+M}$ reste silencieux ou transmet un indicateur (1 bit) pour notifier la destination qu'il a décodé correctement au moins un message qui n'appartient pas au jeu de la destination. Un noeud reste silencieux donc uniquement s'il s'agit d'une source qui n'assure pas de fonction de relayage ou s'il n'a pas décodé au moins un message correctement qui n'appartient pas au jeu de la destination c'est-à-dire soit il n'a pas décodé correctement aucun message ou soit s'il a décodé correctement un ou plusieurs messages correctement alors ces messages appartiennent tous au jeu de la destination.

La quantité de signalisation agrégée transmise sur le canal de contrôle broadcast de la destination vers les sources et les relais à l'issue des $T_{max} = 4$ intervalles de temps est égale à $T_{max} \times (\lceil \log_2(M + L) \rceil + M) = 24 bits$ avec $\lceil \log_2(M + L) \rceil \, bits$ le nombre de bits nécessaires pour informer de la décision par la destination du noeud sélectionné autorisé à transmettre (scheduled node) $\hat{a}_t$ et $M$ le nombre de bits nécessaires pour informer du jeu correctement décodés de la destination. Soit au total $24 + 24 = 48 bits.$

Pour la mise en oeuvre du mécanisme HARQ selon le mécanisme connu de [1], la quantité de signalisation agrégée transmise sur les canaux de contrôle unicast des sources et des relais vers la destination à l'issue des $T_{max}$ = 4 intervalles de temps est égale à $T_{max} \times (M + L) \times M$ = 72 *bits*. En effet, les $M + L$ noeuds transmettent leur jeu de messages correctement décodés ($M$ bits pour indiquer quelle source est correctement décodée) au début de chaque intervalle de temps de la deuxième phase. La quantité de signalisation agrégée transmise sur le canal de contrôle broadcast de la destination vers les sources et les relais à l'issue des $T_{max}$ = 4 intervalles de temps est égale à

$$T_{max} \times (\lceil \log_2(M + L) \rceil + 1) = 16 \, bits$$ avec $\lceil \log_2(M + L) \rceil \, bits$ le nombre de bits nécessaires pour informer de la décision par la destination du noeud sélectionné autorisé à transmettre (scheduled node) $\hat{a}_t$ et 1 bit à chaque intervalle de temps pour la transmission d'un accord/désaccord commun ACK/NACK. Soit au total 72 + 16 = 88 *bits*.

La comparaison peut différencier entre les canaux unicast et les canaux broadcast.

En ce qui concerne les canaux de contrôle unicast entre les noeuds et la destination, la quantité de signalisation agrégée transmise est au moins $M$ fois inférieure pour le procédé selon l'invention. Ceci est avantageux puisque ces canaux sont les plus coûteux. Selon l'exemple, la réduction est de $T_{max} \times (M + L) \times M - T_{max} \times (M + L) = T_{max} \times (M + L)(M - 1)$ = 72 - 24 = 48 *bits*.

Selon le procédé selon l'invention, la quantité de signalisation agrégée transmise peut à la limite être nulle dans le meilleur des scénarios.

En ce qui concerne le canal de contrôle broadcast de la destination aux noeuds, la quantité de signalisation agrégée transmise selon le procédé selon l'invention augmente de $T_{max} \times$

$$(\lceil \log_2(M + L) \rceil + M) - T_{max} \times (\lceil \log_2(M + L) \rceil + 1) = T_{max} \times (M - 1) = 8 bits$$ ce qui est un compromis acceptable.

Références :

[1] A. Mohamad, R. Visoz and A. O. Berthet, "Cooperative Incremental Redundancy Hybrid Automatic Repeat Request Strategies for Multi-Source Multi-Relay Wireless Networks," IEEE Commun. Lett., vol. 20, no. 9, pp. 1808-1811, Sept. 2016.

## Revendications

**1.** Procédé (1) de transmission de messages successifs formant une trame destiné à être mis en oeuvre par un système de télécommunication à $M$ sources ($S_1, \dots , S_M$), éventuellement $L$ relais ($R_1, \dots, R_L$) et une destination ($D$), $M \geq 2$, $L \geq 0$ selon un schéma d'accès multiple orthogonal du canal de transmission entre les noeuds pris parmi les $M$ sources et les $L$ relais avec un nombre maximum de $M + T_{max}$ intervalles de temps par trame transmise dont $M$ intervalles alloués pendant une première phase à la transmission successive des $M$ sources et au maximum $T_{max}$ intervalles pour une ou plusieurs transmissions coopératives alloués pendant une deuxième phase à un ou plusieurs noeuds sélectionnés selon une stratégie de sélection, $1 \leq T_{max}$, les noeuds fonctionnant en mode half-duplex, le procédé comprenant :

- décodage par au moins un noeud ($S_1, \dots , S_M, R_1, \dots, R_L$) de messages transmis par les sources avec détection d'erreurs sur les messages pour déterminer un jeu de messages de sources correctement décodés par ce noeud,
- décodage par la destination ($D$) de messages provenant d'un noeud ($S_1, \dots, S_M, R_1, \dots, R_L$) avec détection d'erreurs sur les messages pour déterminer un jeu de messages de sources correctement décodés par la destination, le procédé comprenant en outre pour un intervalle t de temps de la deuxième phase
- transmission de la destination ($D$) aux noeuds ($S_1, \dots, S_M, R_1, \dots, R_L$) d'un message de contrôle indiquant son jeu ($S_{D,t-1}$) de messages de sources correctement décodés,
- détermination par au moins un noeud ($S_1, \dots, S_M, R_1, \dots, R_L$) si au moins un message de son jeu de messages de sources correctement décodés n'appartient pas au jeu de messages de sources correctement décodés par la destination, le procédé **caractérisé en ce qu'**il comprend:

- transmission d'un indicateur binaire par le au moins un noeud ($S_1, \dots, S_M, R_1, \dots, R_L$) vers la destination ($D$) indiquant le résultat de la détermination,
- diffusion par la destination ($D$) d'une décision de sélection d'un des noeuds ($S_1, \dots , S_M, R_1, \dots, R_L$) autorisé à transmettre pendant l'intervalle t de transmission.

**2.** Procédé (1) de transmission selon la revendication 1 selon lequel l'indicateur binaire prend la valeur un quand la détermination par le noeud conduit à l'identification d'au moins un message et prend la valeur zéro dans le cas contraire.

**3.** Procédé (1) de transmission selon la revendication 1 selon lequel si le jeu ($S_{D,t-1}$) de messages de sources correctement décodés par la destination indiqué dans le message de contrôle comprend toutes les sources ou si $t = T_{max}$ alors la deuxième phase est interrompue, les noeuds et la destination effacent toute mémorisation des messages de la trame et une nouvelle trame est transmise.

**4.** Procédé (1) de transmission selon la revendication 1, selon lequel la stratégie de sélection des noeuds correspond à chaque intervalle à la sélection du noeud parmi les noeuds dits noeuds éligibles qui ont décodés correctement au moins une source que la destination n'a pas décodé correctement à l'issue de l'intervalle de temps précédent et qui bénéficie de la meilleure qualité instantanée parmi des qualités instantanées des liens entre ces noeuds éligibles et la destination.

**5.** Procédé (1) selon la revendication 1 selon lequel un noeud qui assure une fonction de relayage met en oeuvre un relayage dit JNCC, JNCC étant un codage réseau et canal conjoint.

**6.** Procédé (1) selon la revendication 1 selon lequel un noeud qui assure une fonction de relayage met en oeuvre un relayage dit DCC, DCC étant un codage de canal distribué.

**7.** Procédé (1) selon la revendication 1 selon lequel un noeud qui assure une fonction de relayage met en oeuvre un relayage dit à répétition avec combinaison dite MRC à la destination.

**8.** Système comprenant $M$ sources ($S_1, ..., S_M$), éventuellement $L$ relais ($R_1, ..., R_L$) et une destination ($D$), $M \geq 2$, $L \geq 0$ avec un schéma d'accès multiple orthogonal du canal de transmission entre les noeuds pris parmi les $M$ sources et les $L$ relais avec un nombre maximum de $M + T_{max}$, $T_{max} \geq 1$, intervalles de temps par trame transmise dont $M$ intervalles alloués pendant une première phase à la transmission successive des $M$ sources, et au maximum $T_{max}$ intervalles pour une ou plusieurs transmissions coopératives alloués pendant une deuxième phase à un ou plusieurs noeuds sélectionnés selon une stratégie de sélection, les noeuds fonctionnant en mode half-duplex, adapté pour une mise en oeuvre d'un procédé de transmission selon l'une des revendications 1 à 7.

**Patentansprüche**

**1.** Verfahren (1) zur Übertragung von einen Rahmen bildenden aufeinanderfolgenden Nachrichten, das dazu bestimmt ist, von einem Telekommunikationssystem mit M Quellen ($S_1, ..., S_M$), ggf. L Relais ($R_1, ..., R_L$) und einem Ziel (D) durchgeführt zu werden, $M \geq 2$, $L \geq 0$, gemäß einem orthogonalen Mehrfachzugriffsschema des Übertragungskanals zwischen den genutzten Knoten unter den M Quellen und den L Relais mit einer maximalen Anzahl von $M + T_{max}$ Zeitintervallen pro übertragenem Rahmen, davon während einer ersten Phase der aufeinanderfolgenden Übertragung der M Quellen M zugewiesenen Intervallen und maximal $T_{max}$ Intervallen für eine oder mehrere kooperative Übertragungen, die während einer zweiten Phase einem oder mehreren gemäß einer Auswahlstrategie ausgewählten Knoten zugewiesen werden, $1 \leq T_{max}$, wobei die Knoten im Halbduplexbetrieb arbeiten, wobei das Verfahren enthält:

- Decodieren durch mindestens einen Knoten ($S_1, ..., S_M, R_1, ..., R_L$) von von den Quellen übertragenen Nachrichten, mit Erkennung von Fehlern in den Nachrichten, um einen Satz von Nachrichten von Quellen zu bestimmen, die korrekt von diesem Knoten decodiert werden,
- Decodieren durch das Ziel (D) von Nachrichten, die von einem Knoten ($S_1, ..., S_M, R_1 ..., R_L$) kommen, mit Erkennung von Fehlern in den Nachrichten, um einen Satz von Nachrichten von Quellen zu bestimmen, die korrekt vom Ziel decodiert werden,
wobei das Verfahren außerdem für ein Zeitintervall t der zweiten Phase enthält

- Übertragung vom Ziel (D) an die Knoten ($S_1, ..., S_M, R_1, ..., R_L$) einer Kontrollnachricht, die seinen Satz ($S_{D,t-1}$) von korrekt decodierten Nachrichten von Quellen anzeigt,
- Bestimmung durch mindestens einen Knoten ($S_1, ..., S_M, R_1, ..., R_L$), ob mindestens eine Nachricht seines Satzes von korrekt decodierten Nachrichten von Quellen nicht zum Satz von korrekt vom Ziel decodierten Nachrichten von Quellen gehört,

wobei das Verfahren **dadurch gekennzeichnet ist, dass** es enthält:

- Übertragung eines Binärindikators durch den mindestens einen Knoten ($S_1$, ..., $S_M$, $R_1$, ..., $R_L$) an das Ziel (D), der das Ergebnis der Bestimmung anzeigt,
- Verbreitung durch das Ziel (D) einer Auswahlentscheidung eines der Knoten ($S_1$, ..., $S_M$, $R_1$, ..., $R_L$), der berechtigt ist, während des Übertragungsintervalls t zu übertragen.

2. Übertragungsverfahren (1) nach Anspruch 1, gemäß dem der Binärindikator den Wert eins annimmt, wenn die Bestimmung durch den Knoten zur Identifizierung mindestens einer Nachricht führt, und im gegenteiligen Fall den Wert null annimmt.

3. Übertragungsverfahren (1) nach Anspruch 1, gemäß dem, wenn der in der Kontrollnachricht angezeigte Satz ($S_{D,t-1}$) von korrekt durch das Ziel decodierten Nachrichten von Quellen alle Quellen enthält, oder wenn t = $T_{max}$, die zweite Phase unterbrochen wird, die Knoten und das Ziel jede Speicherung der Nachrichten des Rahmens löschen und ein neuer Rahmen übertragen wird.

4. Übertragungsverfahren (1) nach Anspruch 1, gemäß dem die Auswahlstrategie der Knoten in jedem Intervall der Auswahl des Knotens unter den wählbare Knoten genannten Knoten entspricht, die mindestens eine Quelle korrekt decodiert haben, die das Ziel nicht am Ende des vorhergehenden Zeitintervalls korrekt decodiert hat und die von der besten augenblicklichen Qualität unter den augenblicklichen Qualitäten der Verbindungen zwischen diesen wählbaren Knoten und dem Ziel profitiert.

5. Verfahren (1) nach Anspruch 1, gemäß dem ein Knoten, der eine Weiterleitungsfunktion gewährleistet, eine JNCC genannte Weiterleitung durchführt, wobei JNCC eine gemeinsame Netz- und Kanalcodierung ist.

6. Verfahren (1) nach Anspruch 1, gemäß dem ein Knoten, der eine Weiterleitungsfunktion gewährleistet, eine DCC genannte Weiterleitung durchführt, wobei DCC eine verteilte Kanalcodierung ist.

7. Verfahren (1) nach Anspruch 1, gemäß dem ein Knoten, der eine Weiterleitungsfunktion gewährleistet, eine Weiterleitung genannt mit Wiederholung durchführt, mit MRC genannter Kombination mit dem Ziel.

8. System, das M Quellen ($S_1$, ..., $S_M$), ggf. L Relais ($R_1$, ..., $R_L$) und ein Ziel (D) enthält, M ≥ 2, L ≥ 0, mit einem orthogonalen Mehrfachzugriffsschema des Übertragungskanals zwischen den genutzten Knoten unter den M Quellen und den L Relais mit einer maximalen Anzahl von M + $T_{max}$, $T_{max}$ ≥ 1, Zeitintervallen pro übertragenem Rahmen, davon während einer ersten Phase der aufeinanderfolgenden Übertragung der M Quellen M zugewiesenen Intervallen und maximal $T_{max}$ Intervallen für eine oder mehrere kooperative Übertragungen, die während einer zweiten Phase einem oder mehreren gemäß einer Auswahlstrategie ausgewählten Knoten zugewiesen werden, wobei die Knoten im Halbduplexbetrieb arbeiten, das für eine Durchführung eines Übertragungsverfahrens nach einem der Ansprüche 1 bis 7 geeignet ist.

**Claims**

1. Method (1) for transmitting successive messages forming a frame intended to be implemented by a telecommunications system with *M* sources (*$S_1$, ...,$S_M$*), possibly *L* relays (*$R_1$,...,$R_L$*) and a destination (*D*), *M* ≥ *2*, *L* ≥ *0* according to an orthogonal multiple access scheme of the transmission channel between the nodes taken from among the *M* sources and the *L* relays with a maximum number of *M + $T_{max}$* time slots per transmitted frame including **M** slots allocated, during a first phase, to the successive transmission of the **M** sources, and at most *$T_{max}$* slots for one or more cooperative transmissions allocated, during a second phase, to one or more nodes selected according to a selection strategy, *1* ≤ *$T_{max}$*, the nodes operating in half-duplex mode, the method comprising:

- decoding, by at least one node (*$S_1$,...,$S_M$, $R_1$,...,$R_L$*), of messages transmitted by the sources with detection of errors on the messages in order to determine a set of source messages correctly decoded by this node,
- decoding, by the destination (*D*), of messages from a node (*$S_1$, ...,$S_m$, $R_1$, ...,$R_L$*) with detection of errors on the messages in order to determine a set of source messages correctly decoded by the destination,

the method furthermore comprising, for a time slot *t* of the second phase:

- transmission, from the destination ($D$) to the nodes ($S_1,...,S_M$, $R_1,...,R_L$), of a control message indicating its set ($S_{D,t-1}$) of correctly decoded source messages,
- determination, by at least one node ($S_1,...,S_M$, $R_1,...,R_L$), whether at least one message from its set of correctly decoded source messages does not belong to the set of source messages correctly decoded by the destination, the method being **characterized in that** it comprises:
- transmission of a binary indicator by the at least one node ($S_1,...,S_M$, $R_1,...,R_L$) to the destination ($D$) indicating the result of the determination,
- broadcast, by the destination ($D$), of a decision to select one of the nodes ($S_1,...,S_M$, $R_1,...,R_L$) authorized to transmit during the transmission slot $t$.

2. Transmission method (1) according to Claim 1, wherein the binary indicator takes the value one when the determination by the node leads to the identification of at least one message, and otherwise takes the value zero.

3. Transmission method (1) according to Claim 1, wherein, if the set ($S_{D,t-1}$) of source messages correctly decoded by the destination indicated in the control message comprises all of the sources or if $t = T_{max}$, then the second phase is interrupted, the nodes and the destination erase any storage of the messages of the frame and a new frame is transmitted.

4. Transmission method (1) according to Claim 1, wherein the node selection strategy corresponds, at each slot, to the selection of the node from among the nodes said to be eligible nodes that have correctly decoded at least one source that the destination has not correctly decoded at the end of the previous time slot and that has the best instantaneous quality from among the instantaneous qualities of the links between these eligible nodes and the destination.

5. Method (1) according to Claim 1, wherein a node that performs a relaying function implements what is known as JNCC relaying, JNCC standing for joint network channel coding.

6. Method (1) according to Claim 1, wherein a node that performs a relaying function implements what is known as DCC relaying, DCC standing for distributed channel coding.

7. Method (1) according to Claim 1, wherein a node that performs a relaying function implements what is known as repetition relaying with what is known as MRC combination at the destination.

8. System comprising $M$ sources ($S_1,...,S_M$), possibly $L$ relays ($R_1, ... , R_L$) and a destination ($D$), $M \geq 2, L \geq 0$ with an orthogonal multiple access scheme of the transmission channel between the nodes taken from among the $M$ sources and the $L$ relays with a maximum number of $M + T_{max}$, $T_{max} \geq 1$, time slots per transmitted frame including $M$ slots allocated, during a first phase, to the successive transmission of the $M$ sources, and at most $T_{max}$ slots for one or more cooperative transmissions allocated, during a second phase, to one or more nodes selected according to a selection strategy, the nodes operating in half-duplex mode, designed to implement a transmission method according to one of Claims 1 to 7.

## Fig. 1

## Fig. 2

## Fig. 3

## Fig. 4

FEUILLE DE REMPLACEMENT (REGLE 26)

## RÉFÉRENCES CITÉES DANS LA DESCRIPTION

### Documents brevets cités dans la description

- WO 2017098188 A1

### Littérature non-brevet citée dans la description

- Automatic Repeat Request Strategies for Multi-Source Multi-Relay Wireless Networks. *IEEE Commun. Lett.,* Septembre 2016, vol. 20 (9), 1808-1811